# FASCICULE DE BREVET EUROPEEN

(11) **EP 2 944 521 B1**
(45) Date de publication et mention de la délivrance du brevet: **01.01.2020**
(21) Numéro de dépôt: 15157836.6
(22) Date de dépôt: 05.03.2015
(51) Int. Cl.: B60T 1/00, B60T 1/06, B60T 13/74, F16D 7/04, F16D 27/00, F16D 27/112, F16D 63/00, F16D 65/12, F16D 67/02, F16D 67/06, H02K 7/108, B64C 25/42

(54) **Actionneur électromécanique de frein à blocage de parc pour aéronef**
Elektromechanisches Stellglied für Bremse mit Parksperre für Luftfahrzeug
Electromechanical brake actuator with park blocking for aircraft.

(30) Priorité: 24.03.2014 FR 1452467
(43) Date de publication de la demande: 18.11.2015
(73) Titulaire: Safran Landing Systems, 78140 Vélizy-Villacoublay (FR)
(72) Inventeur: Evenor, Eric, 78140 VELIZY-VILLACOUBLAY (FR); Richard, Nathanaël, 78140 VELIZY-VILLACOUBLAY (FR); Durand, Guillaume, 78140 VELIZY-VILLACOUBLAY (FR)
(74) Mandataire: Lavialle, Bruno François Stéphane

(56) Documents cités:
- WO-A1-97/36362
- DE-A1-102012 009 149
- FR-A1- 2 947 599
- US-A1- 2008 115 608

## Description

L'invention est relative à un actionneur électromécanique pour frein d'aéronef équipé d'un organe de freinage de parc.

### ARRIERE-PLAN TECHNOLOGIQUE DE L'INVENTION

On connaît des actionneurs électromécaniques pour frein d'aéronef, comportant un moteur électrique avec un stator et un rotor, un ensemble vis/écrou dont l'un des éléments est entraîné en rotation par le moteur et l'autre élément est astreint à coulisser sans rotation pour exercer sélectivement un effort sur des éléments de friction, comme une pile de disques. L'actionneur de frein est monté sur un support appelé couronne regroupant le plus souvent plusieurs actionneurs.

Pour assurer l'immobilisation de l'aéronef au parking, il est nécessaire de garder l'effort de presse alors même que le moteur de l'actionneur n'est pas alimenté. A cet égard, il est connu d'équiper les actionneurs de frein d'organes de freinage de parc qui permettent de bloquer le rotor du moteur après qu'un effort de presse ait été exercé sur la pile de disques. L'organe de freinage de parc est en général un frein à manque de courant qui bloque l'arbre du moteur de l'actionneur lorsque l'organe n'est plus alimenté, mais qui le débloque dès que le moteur de l'actionneur est alimenté.

Ce type d'organe de parc présente plusieurs inconvénients. Pendant l'utilisation de l'actionneur, la bobine de l'organe de frein de parc reste sous tension ce qui engendre une consommation électrique et des échauffements. Par ailleurs, en cas de microcoupure électrique, l'organe de parc engendre des frictions intempestives qui diminuent le rendement de l'actionneur de frein. En outre, si la bobine de l'organe de parc défaille, l'organe de parc reste enclenché ce qui engendre une usure prématurée de ses garnitures et une perte de rendement significative de l'actionneur. Le document FR 2 947 599 A1 décrit un dispositif d'accouplement avec une navette sans douille.

### OBJET DE L'INVENTION

L'invention a pour objet de proposer un actionneur électromécanique de frein pour aéronef ne comportant pas les inconvénients précités.

### PRESENTATION DE L'INVENTION

En vue de la réalisation de ce but, on propose un actionneur électromécanique de frein pour roue d'aéronef, comportant un moteur électrique avec un stator et un rotor, un ensemble vis/écrou dont l'un des éléments est entraîné en rotation par le moteur et l'autre des éléments est astreint à coulisser sans rotation pour exercer sélectivement un effort sur une pile de disques, l'actionneur comportant un organe de blocage de parc adapté à bloquer sélectivement le rotor du moteur au moins lorsque l'élément coulissant exerce un effort sur la pile de disques. Selon l'invention, l'organe de blocage parc comprend une navette mobile entre une position stable de blocage du rotor du moteur et une position stable de libération de celui-ci sous l'action d'un actionneur à impulsion faisant passer la navette d'une position à l'autre, l'actionneur de frein comportant des moyens de forçage de la navette vers la position de libération lorsque le moteur de l'actionneur de frein est alimenté.

Ainsi, les positions de la navette étant stables, il n'est plus nécessaire d'alimenter en permanence l'organe de freinage de parc. Seule de brèves impulsions sont nécessaires pour faire transiter la navette d'une position à l'autre. De plus, en cas de panne de l'actionneur à impulsion, l'actionneur électromécanique de frein ne reste pas bloqué grâce aux moyens de forçage qui permettent la libération du rotor du moteur.

### BREVE DESCRIPTION DES FIGURES

L'invention sera mieux comprise à la lumière de la description qui suit d'un mode de réalisation non limitatif de l'invention, en référence aux figures des dessins annexés parmi lesquelles :
- La figure 1 est une vue en coupe du bloc moteur d'un actionneur électromécanique de frein d'aéronef ;
- La figure 2 est un schéma de principe du fonctionnement de l'organe de blocage de parc équipant le bloc moteur de la figure 1 ;
- La figure 3 est une vue de face partielle montrant la navette de l'organe de blocage de parc en position de blocage ;
- La figure 4 est une vue de face partielle montrant la navette de l'organe de blocage de parc en position de libération.

### DESCRIPTION DETAILLEE D'UN MODE DE REALISATION PARTICULIER DE L'INVENTION

L'invention est ici illustrée en application à un actionneur électromécanique de freinage en deux parties, comme les actionneurs illustrés dans le document FR 2 877 411. On ne détaille ici que le bloc moteur intégrant l'organe de parc selon l'invention. Ce bloc moteur est destiné à être associé à un bloc poussoir comportant un ensemble vis/écrou, l'un de ces éléments étant entraîné en rotation au moyen du bloc moteur, et l'autre des éléments formant poussoir pour exercer un effort de freinage sur une pile de disques.

Bien entendu, l'invention s'applique également à des actionneurs en un seul bloc intégrant le moteur et l'organe poussoir.

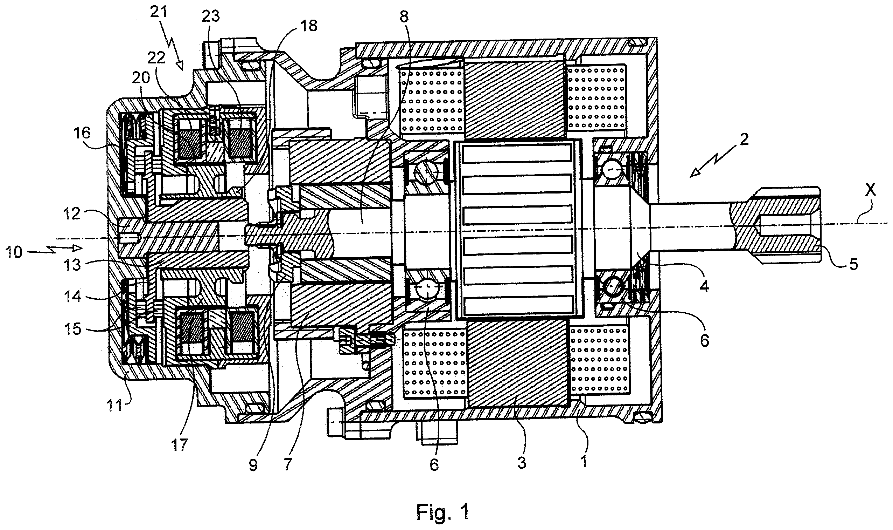

Comme illustré à la figure 1, le bloc moteur de l'actionneur de freinage comporte un châssis 1 renfermant un moteur 2 qui comprend un stator 3 et un rotor 4 dont une extrémité cannelée 5 dépasse du châssis 1 pour entraîner en rotation l'élément tournant de l'ensemble vis/écrou du bloc associé. Le rotor 4 est monté sur des roulements 6 qui définissent un axe de rotation X du rotor 4. A l'arrière du stator est disposé un capteur de position angulaire 7 adapté à fournir une information de position angulaire du rotor 4. Le capteur de position 7 est de forme annulaire et s'étend autour d'un prolongement 8 du rotor 4 qui porte à son extrémité une came cylindrique 9.

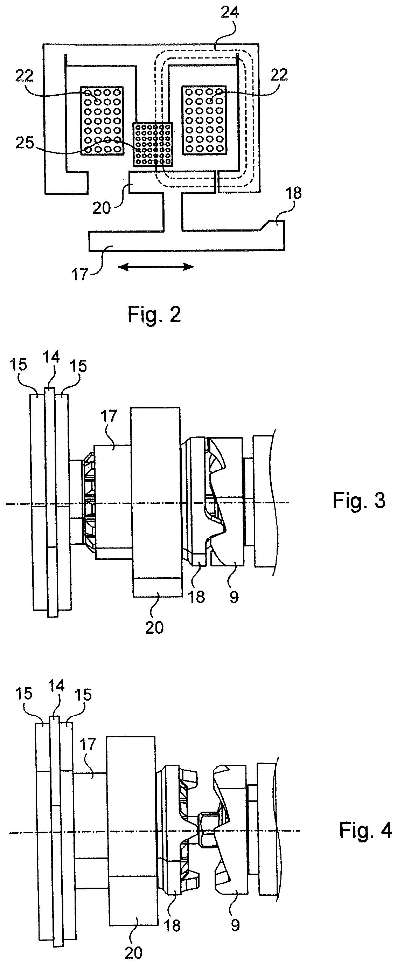

Comme cela est visible aux figures 3 et 4, la came cylindrique 9 comporte une succession de pentes douces séparées par une pente raide.

Un organe de blocage de parc 10 est rapporté à l'arrière du bloc moteur. L'organe de blocage de parc comporte un châssis 11 qui est rapporté sur le châssis 1 du bloc moteur, et qui porte un guide central 12 s'étendant selon l'axe X et sur lequel un manchon cannelé 13 est rapporté pour tourner librement. Le manchon cannelé 13 se prolonge par un plateau 14 sur lequel des disques de friction 15 sont appuyés au moyen d'un ressort 16 formant un limiteur de couple. En effet, le manchon cannelé 13 ne peut tourner que si le couple agissant sur le manchon cannelé 13 dépasse un couple seuil C généré par l'action du ressort 16 sur les disques de friction 15.

Une navette 17 est montée pour coulisser axialement sur le manchon cannelé 13. Les cannelures empêchent toute rotation relative entre la navette 17 et le manchon cannelé 13. L'extrémité de la navette 17 en regard de la couronne dentée 9 porte une couronne dentée 18. La navette 17 porte par ailleurs une douille 20 cylindrique en matériau ferromagnétique qui s'étend en regard d'un actionneur à impulsion 21 comportant deux bobines 22 enchâssées dans une armature 24 en matériau ferromagnétique et portant par ailleurs un aimant permanent 25 disposé pour générer un flux magnétique qui est conduit par l'armature 24.

Comme cela est plus particulièrement visible à la figure 2, la douille 20, et donc la navette 17 est mobile entre deux positions extrêmes dans lesquelles l'extrémité de la douille vient en butée contre l'armature 24. Le flux magnétique de l'aimant permanent 25 peut alors se refermer et tend à maintenir la navette dans la position en butée, qui est dès lors stable. La position illustrée à la figure 2 correspond à la position illustrée à la figure 3, c'est-à-dire une position dans laquelle la couronne dentée 18 coopère avec la came cylindrique 9 pour empêcher le rotor 4 du moteur de tourner. C'est la position de blocage. La position illustrée à la figure 4 correspond à la position de libération, dans laquelle la couronne dentée 18 et la came cylindrique 9 sont éloignées l'une de l'autre. Dans cette position, la navette 17 est en butée contre l'armature 24, mais en position opposée de celle illustrée à la figure 2. Entre les deux positions extrêmes (position de blocage et position de libération) existe une position d'équilibre instable.

Pour faire passer la navette d'une position à l'autre, il suffit d'alimenter les bobines 22 de sorte que celles-ci génèrent un flux magnétique suffisant pour d'une part contrer le flux de l'aimant permanent 20 et d'autre part attirer la navette vers l'autre position. Dès que la navette est arrivée en position, l'alimentation des bobines 22 est coupée, et la navette est maintenue en position grâce au flux de l'aimant permanent. L'alimentation des bobines 22 est très brève et s'apparente à une impulsion.

On remarquera qu'en position de blocage (figure 3), une rotation du moteur dans un sens où les dents de la couronne dentée 18 coopèrent avec les parties en pente prononcée de la came cylindrique 9 est impossible. La couronne dentée 18 et la came cylindrique 9 forment alors des moyens de blocage du rotor.

Cependant, si le couple appliqué au rotor 4 dépasse le couple seuil C, le dispositif limiteur de couple se mettra à glisser, de sorte qu'une rotation du rotor sera alors autorisée. Diverses raisons peuvent amener un tel dépassement de couple, comme par exemple une commande intempestive du moteur, ou encore une remontée de couple vers le rotor du fait de la dilatation ou du refroidissement des disques du frein après un freinage sévère, alors que les actionneurs de frein ont été bloqués lors d'une application d'un effort de parc. Le dispositif limiteur de couple permet de protéger toute la chaîne cinématique.

Si la navette est en position de blocage (figure 3) et si, du fait d'une défaillance, les bobines 22 ne pouvaient fonctionner, il reste alors la ressource de faire tourner le rotor 4 du moteur dans l'autre sens, de sorte à faire coopérer les dents de la couronne dentée 18 avec les parties en pente douce de la came cylindrique 9, ce qui force les dents à monter sur les dites parties en pente douce, et donc éloigne la navette 17 de la position de blocage. L'ampleur de cet éloignement est prévu suffisant pour faire passer à la navette la position d'équilibre (instable) entre les deux positions, de sorte que la navette 17 se déplace d'elle-même vers la position de libération. On peut ainsi forcer la navette vers la position de libération. En outre, le couple résistant à la rotation du rotor 4 est faible, ce qui induit une perte de rendement limitée.

L'invention n'est pas limitée à ce qui vient d'être décrit, mais englobe au contraire toute variante entrant dans le cadre défini par les revendications. En particulier, il est possible de placer la couronne dentée sur le rotor et la came cylindrique sur la navette. On pourra de façon plus générale utiliser tout autre moyen assurant à la fois un blocage dans un sens de rotation du rotor, et un forçage de la navette vers la position de libération, lorsque le rotor tourne dans l'autre sens, comme par exemples deux cames cylindriques à profils similaires. Enfin, tout autre dispositif de stabilisation des positions et tout autre actionneur à impulsion pourront être utilisés pour faire transiter la navette d'une position à l'autre, comme par exemple un dispositif à ressort bistable associé à une came pivotante faisant transiter la navette d'une position à l'autre.

## Revendications

1. Actionneur électromécanique de frein pour roue d'aéronef, comportant un moteur électrique(2) avec un stator (3) et un rotor (4), un ensemble vis/écrou dont l'un des éléments est entraîné en rotation par le moteur et l'autre des éléments est astreint à coulisser sans rotation pour exercer sélectivement un effort sur une pile de disques, l'actionneur comportant un organe de blocage de parc (10) adapté à bloquer sélectivement le rotor du moteur au moins lorsque l'élément coulissant exerce un effort sur la pile de disques, l'organe de blocage parc comprenant une navette (17) montée pour canaliser selon un axe (X) de rotation du rotor entre une position stable de blocage du rotor du moteur et une position stable de libération de celui-ci sous l'action d'un actionneur à impulsion (22,24,25) qui comporte deux bobines (22) enchâssées dans une armature (24) en matériau ferromagnétique pour générer des flux magnétiques canalisés par l'armature faisant passer la navette d'une position à l'autre, l'actionneur de frein comportant des moyens de forçage (9,18) de la navette vers la position de libération lorsque le moteur de l'actionneur de frein est alimenté, **caractérisé en ce que** la navette (17) porte une douille (20) cylindrique en matériau ferromagnétique s'étendant en regard de l'actionneur à impulsion de sorte que dans chacune des positions, une extrémité de la douille vient en butée contre l'armature (24).

2. Actionneur électromécanique de frein selon la revendication 1, dans lequel la navette est maintenue dans l'une ou l'autre des positions au moyen d'un aimant permanent (25) générant un flux magnétique canalisé par l'armature (24) définissant un chemin magnétique refermé par la douille (20) de la navette (17).

3. Actionneur électromagnétique de frein selon la revendication 1, dans lequel les bobines (22) de l'actionneur à impulsion (22) sont adaptées à générer un flux magnétique qui contre celui de l'aimant permanent et qui fait transiter la navette d'une position à l'autre.

4. Actionneur électromagnétique de frein selon la revendication 1, dans lequel la navette et le rotor portent pour l'un une couronne dentée (18) et pour l'autre une came cylindrique (9) comportant des portions en pente douce alternées avec des portions en pente prononcée, formant à la fois des moyens de blocage empêchant la rotation du rotor dans un sens, et des moyens de forçage de la navette vers la position de libération, en cas de rotation du rotor dans un autre sens.

5. Actionneur électromécanique de frein selon la revendication 1, dans lequel la navette est montée pour coulisser sans rotation sur un manchon cannelé (13) qui est lui-même immobilisé en rotation par un dispositif limiteur de couple (14,15,16) adapté à autoriser une rotation du manchon et donc de la navette si le couple imposé à la navette par le rotor du moteur dépasse un couple seuil.

## Patentansprüche

1. Elektromechanischer Bremsaktor für ein Luftfahrzeugrad, umfassend einen Elektromotor (2) mit einem Stator (3) und einem Rotor (4), eine Einheit aus Schraube/Mutter, von der eines der Elemente von dem Motor in Drehung angetrieben wird und das andere der Elemente gezwungen ist, sich ohne Drehung zu verschieben, um selektiv eine Kraft auf einen Stapel Scheiben auszuüben, wobei der Aktor ein Parkblockierelement (10) umfasst, das geeignet ist, selektiv den Rotor des Motors zumindest dann zu blockieren, wenn das Schiebeelement eine Kraft auf den Stapel Scheiben ausübt, wobei das Parkblockierelement ein Pendelelement (17) umfasst, das entlang einer Drehachse (X) des Rotors zwischen einer stabilen Position zum Blockieren des Rotors des Motors und einer stabilen Position zur Freigabe desselben unter der Wirkung eines Impulsaktors (22, 24, 25) verschiebbar gelagert ist, der zwei Spulen (22) umfasst, die in einem Anker (24) aus ferromagnetischem Material eingebettet sind, um Magnetflüsse zu erzeugen, die von dem Anker kanalisiert werden und das Pendelelement von einer Position in die andere bewegen, wobei der Bremsaktor Mittel (9, 18) zum Zwingen des Pendelelements in die Freigabeposition umfasst, wenn der Motor des Bremsaktors gespeist wird, **dadurch gekennzeichnet, dass** das Pendelelement (17) eine zylindrische Hülse (20) aus ferromagnetischem Material trägt, die sich derart gegenüber dem Impulsaktor erstreckt, dass in jeder der Positionen ein Ende der Hülse an dem Anker (24) zum Anschlag kommt.

2. Elektromechanischer Bremsaktor nach Anspruch 1, bei dem das Pendelelement in der einen oder der anderen der Positionen mittels eines Dauermagneten (25) gehalten wird, der einen Magnetfluss erzeugt, der von dem Anker (24) kanalisiert wird und der einen magnetischen Pfad definiert, der von der Hülse (20) des Pendelelements (17) geschlossen wird.

3. Elektromagnetischer Bremsaktor nach Anspruch 1, bei dem die Spulen (22) des Impulsaktors geeignet sind, einen Magnetfluss zu erzeugen, der dem des Dauermagneten entgegenwirkt und der das Pendelelement von einer Position in die andere bewegt.

4. Elektromagnetischer Bremsaktor nach Anspruch 1, bei dem das Pendelelement und der Rotor zum einen einen Zahnkranz (18) und zum anderen einen zylindrischen Nocken (9) tragen, der Abschnitte mit sanfter Steigung umfasst, die sich mit Abschnitten mit starker Steigung abwechseln, die Blockiermittel bilden, die die Drehung des Rotors in eine Richtung verhindern, und zugleich Mittel zum Zwingen des Pendelelements in die Freigabeposition, im Falle der Drehung des Rotors in eine andere Richtung.

5. Elektromechanischer Bremsaktor nach Anspruch 1, bei dem das Pendelelement auf einer gerillten Hülse (13) ohne Drehung verschiebbar gelagert ist, wobei die Hülse selbst durch eine Drehmomentbegrenzungsvorrichtung (14, 15, 16) in Drehung blockiert ist, die geeignet ist, eine Drehung der Hülse und folglich des Pendelelements zu gestatten, wenn das von dem Rotor des Motors auf das Pendelelement aufgebrachte Drehmoment ein Schwellenwertdrehmoment überschreitet.

## Claims

1. Electromechanical brake actuator for an aircraft wheel, comprising an electric motor (2) with a stator (3) and a rotor (4), a screw/nut assembly, of which one of the elements is rotationally driven by the motor and the other of the elements is compelled to slide without rotation to selectively exert a force on a stack of discs, the actuator comprising a park blocking member (10) suitable for selectively blocking the rotor of the motor at least when the sliding element exerts a force on the stack of discs, the park blocking member comprising a shuttle (17) that can move along a rotation axis (X) of the rotor between a stable position of blocking of the rotor of the motor and a stable position of freeing the latter under the action of a pulse actuator (22, 24, 25) which includes two windings (22) embedded in a ferromagnetic material armature (24) to generate magnetic forces channelled by the armature causing the shuttle to pass from one position to the other, the brake actuator comprising means (9, 18) for forcing the shuttle to the freeing position when the motor of the brake actuator is powered, **characterised in that** the shuttle (17) bears a cylindrical ferromagnetic material bushing (20) facing the pulse actuator so that in each of the positions one end of the bushing comes to abut against the armature (24).

2. Electromechanical brake actuator according to claim 1, in which the shuttle is held in one or other of the positions by means of a permanent magnet (25) generating a magnetic flux channelled by the armature (24) defining a magnetic path enclosed by the bushing (20) of the shuttle (17).

3. Electromagnetic brake actuator according to claim 1, in which the windings (22) of the pulse actuator (22) are suitable for generating a magnetic flux which counters that of the permanent magnet and which causes the shuttle to pass from one position to the other.

4. Electromagnetic brake actuator according to claim 1, in which the shuttle and the rotor bear, for one, a toothed crown ring (18) and, for the other, a cylindrical cam (9) comprising portions with gentle slope alternating with portions with steep slope, forming both blocking means preventing the rotation of the rotor in one direction, and means for forcing the shuttle to the freeing position, in case of rotation of the rotor in another direction.

5. Electromechanical brake actuator according to claim 1, in which the shuttle is mounted to slide without rotation on a splined sleeve tube (13) which is itself rotationally immobilized by a torque limiter device (14, 15, 16) designed to allow a rotation of the sleeve tube and therefore of the shuttle if the torque imposed on the shuttle by the rotor of the motor exceeds a threshold torque.
